(19) **Europäisches Patentamt / European Patent Office / Office européen des brevets**

(11) **EP 1 960 750 B1**

(12) **FASCICULE DE BREVET EUROPEEN**

(45) Date de publication et mention
de la délivrance du brevet:
**18.03.2009 Bulletin 2009/12**

(21) Numéro de dépôt: **06819473.7**

(22) Date de dépôt: **14.11.2006**

(51) Int Cl.:
***G01J 11/00*** *(2006.01)*

(86) Numéro de dépôt international:
**PCT/EP2006/068455**

(87) Numéro de publication internationale:
**WO 2007/057394 (24.05.2007 Gazette 2007/21)**

(54) **DISPOSITIF DE MESURE DE PROFIL D'IMPULSIONS MONOCOUP DE TRES COURTE DUREE**

EINRICHTUNG ZUR MESSUNG VON EINZELIMPULSPROFILEN SEHR KURZER DAUER

DEVICE FOR MEASURING VERY SHORT DURATION SINGLE-SHOT PULSE PROFILES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.11.2005 FR 0553467**

(43) Date de publication de la demande:
**27.08.2008 Bulletin 2008/35**

(73) Titulaire: **Commissariat à l'Energie Atomique 75015 Paris (FR)**

(72) Inventeurs:
- **JOLLY, Alain**
  **F-33510 Andernos (FR)**
- **MUSSOT, Arnaud**
  **F-59000 Lille (FR)**

(74) Mandataire: **Ilgart, Jean-Christophe BREVALEX**
**3, rue du Docteur Lancereaux**
**75008 Paris (FR)**

(56) Documents cités:
**US-A1- 2005 168 247**

- **JONAS HANSRYD ET AL: "Fiber-Based Optical Parametric Amplifiers and Their Applications" IEEE JOURNAL OF SELECTED TOPICS IN QUANTUM ELECTRONICS, IEEE SERVICE CENTER, PISCATAWAY, NJ, US, vol. 8, no. 3, mai 2002 (2002-05), XP011066136 ISSN: 1077-260X**
- **DENG K-L ET AL: "SINGLE-SHOT OPTICAL SAMPLING OSCILLOSCOPE FOR ULTRAFAST OPTICAL WAVEFORMS" IEEE PHOTONICS TECHNOLOGY LETTERS, IEEE SERVICE CENTER, PISCATAWAY, NJ, US, vol. 10, no. 3, mars 1998 (1998-03), pages 397-399, XP011045939 ISSN: 1041-1135**

## Description

Domaine technique et art antérieur

L'invention concerne un dispositif de mesure de profil d'impulsions optiques ou électriques monocoup de très courte durée.

L'invention concerne également un dispositif de mesure de profil d'impulsions optiques ou électriques à faible taux de répétition.

L'invention s'applique à la mesure d'impulsions laser de durées comprises entre quelques picosecondes et quelques dizaines de nanosecondes, dans des bandes de fréquences analogiques typiques comprises, compte tenu de la technologie actuelle des fibres optiques et composants associés, entre 10 GHz et 300 GHz.

L'invention s'applique également à la mesure d'impulsions électriques monocoup de durées comprises entre quelques dizaines de picosecondes et quelques dizaines de nanosecondes, dans des bandes de fréquences analogiques comprises, compte tenu de la technologie actuelle des modulateurs électro-optiques, entre 10 GHz et 100 GHz.

La mesure du profil d'impulsions monocoup de courte durée est généralement difficile et requiert une instrumentation onéreuse. Selon les performances recherchées, différents types d'instruments sont utilisés, tels que, par exemple :

- les oscilloscopes électriques à échantillonnage monocoup, pour des impulsions dont les bandes de fréquences analogiques typiques varient, par exemple, de 0 à 7 GHz (la technologie est alors celle des convertisseurs «Flash»),
- les caméras à balayage de fente (caméras CBF) pour des impulsions dont les bandes de fréquences analogiques (constituant le spectre du signal) varient typiquement de quelques GHz à 100 GHz (la technologie utilisée est celle des tubes électroniques à vide, avec déflexion latérale linéarisée permettant de restituer l'axe des temps) ; les caméras à balayage de fente sont des équipements complexes et onéreux qui nécessitent d'être fréquemment recalibrés, à sensibilité optique réduite et dont la sensibilité aux perturbations de l'environnement est importante,
- les autocorrélateurs ou les dispositifs basés sur le traitement de la phase spectrale pour des impulsions en optique cohérente dont les bandes de fréquences analogiques typiques varient de quelques centaines de GHz à plusieurs dizaines de THz (ces équipements ne fournissent en fait qu'une mesure relative de la durée de l'impulsion, laquelle mesure est obtenue en tenant compte d'hypothèses sur la forme du profil) ; la technologie utilise celle des moyens de l'optique non linéaire et met en oeuvre une conversion temps/espace couplée à une analyse d'image et un traitement de signal.

Un dispositif de mesure permettant d'étendre de façon très significative les bandes de fréquences analogiques des impulsions mesurées a déjà fait l'objet de la demande de brevet français publiée N° FR2872279, déposée le 15.6.2004 au nom de la présente demanderesse.

Les documents US2005/168247, Hansryd et al : "Fiber-Based Optical Parametric Amplifiers and Their Applications", IEEE Journal of Selected Topics in Quantum Electronics, Vol. 8, No 3, Pages 506-519, May 2002 et Deng et al : "Single-shot Optical sampling Oscilloscope for Ultrafast Optical Waveforms", IEEE Photonics Technology Letters, Vol. 10, No. 3, Pages 397-399, March 1998, divulguent des dispositifs de mesure de profil d'impulsions monocoup de très courte durée.

Le dispositif selon l'invention permet d'atteindre ces mêmes objectifs en améliorant de surcroît la dynamique de la mesure grâce à un facteur de bruit sensiblement réduit.

Exposé de l'invention

L'invention est définie par un dispositif de mesure de profil d'une impulsion optique monocoup ou à faible taux de répétition, comprenant :

- des moyens de réplication (100,105,120,125,130) pour créer, à partir d'une impulsion optique initiale (I), une série d'impulsions répliques de ladite impulsion avec une période de récurrence (τ);
- des moyens d'extraction (100b,150) desdites impulsions répliques ;
- des moyens d'échantillonnage optique (160,161) des impulsions répliques extraites (Ri) pour délivrer des échantillons optiques (Ei) à partir des impulsions répliques extraites (Ri) avec une période d'échantillonnage (Te), l'écart entre la période d'échantillonnage et la période de récurrence étant choisi non nul et très inférieur à période de récurrence;
- des moyens de détection (180) pour former un signal électrique à partir des échantillons optiques (Ei) délivrés par lesdits moyens d'échantillonnage optique (160,161);
- lesdits moyens de réplication comprenant des moyens d'amplification paramétrique (120,140,141, 142) pour amplifier lesdites impulsions répliques.

L'invention concerne en outre un dispositif de mesure de profil d'une impulsion électrique monocoup ou à faible taux de répétition comprenant un modulateur électro-optique en série avec un tel dispositif de mesure de profil d'impulsion optique.

Dans les deux cas le très faible niveau de bruit des moyens d'amplification paramétrique permet d'atteindre une dynamique de mesure particulièrement élevée.

D'autres caractéristiques et avantages de l'invention apparaîtront à la lecture d'un mode de réalisation préférentiel de l'invention faisant référence aux figures jointes parmi lesquelles :

Brève description des figures

- la figure 1 représente un dispositif de mesure d'impulsion optique monocoup selon l'invention ;
- la figure 2 représente le spectre du signal lumineux en sortie de l'amplificateur paramétrique utilisé dans le dispositif de la figure 1;
- les figures 3A-3C représentent des diagrammes temporels qui illustrent le fonctionnement du dispositif de mesure de la figure 1 ;
- les figures 4A-4C représentent des diagrammes temporels qui illustrent le pilotage des commandes de gain pour le dispositif de mesure de la figure 1 ;
- la figure 5 représente une première variante de réalisation d'un échantillonneur optique ;
- la figure 6 représente une seconde variante de réalisation d'un échantillonneur optique ;
- les figures 7A-7C représentent des diagrammes temporels qui illustrent le fonctionnement du circuit représenté en figure 6 ;
- la figure 8 représente une troisième variante de réalisation d'un échantillonneur optique ;
- la figure 9 représente une quatrième variante de réalisation d'un échantillonneur optique.

Sur toutes les figures, les mêmes signes de référence désignent les mêmes éléments.

Description détaillée de modes de réalisation de l'invention

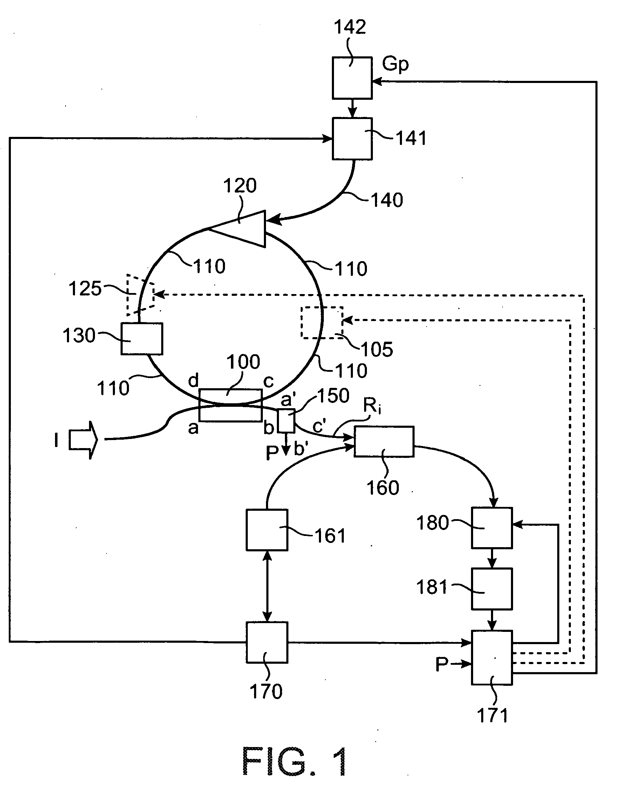

La figure 1 représente un dispositif de mesure d'impulsion optique selon un mode de réalisation de l'invention.

Le dispositif comprend un coupleur optique à quatre ports 100, une fibre optique monomode 110 présentant une pluralité de tronçons, un amplificateur paramétrique 120 qui peut lui-même être composé d'un ou plusieurs tronçons de fibres, un filtre optique 130, les éléments précités étant arrangés en boucle.

Les quatre ports du coupleur 100 sont notés a, b, c, d. Le port a constitue l'entrée du dispositif et reçoit l'impulsion laser à mesurer, le port b est relié à l'entrée d'un coupleur optique à trois ports 150, le port c est relié à l'entrée de l'amplificateur paramétrique via un premier tronçon de la fibre 110 et le port d est relié à la sortie du filtre optique par un second tronçon de la fibre 110.

L'amplificateur paramétrique 120 est pompé au moyen d'une onde de pompe générée par une source laser 142, dite laser de pompe de l'amplificateur paramétrique, délivrée via un dispositif de mise en forme temporelle 141 et une fibre optique de transfert 140 au dit amplificateur. La sortie de l'amplificateur paramétrique 120 est reliée au filtre optique 130 grâce à un troisième tronçon de la fibre 110.

Les éléments 105 et 125, représentés en pointillés, sont optionnels et seront décrits plus loin.

Les trois ports du coupleur optique 150 sont notés a', b' et c'. Le port a' est relié au port b du coupleur 100, le port b' est relié au dispositif de contrôle 171, le port c'est relié à un échantillonneur optique 160, les liaisons étant réalisées au moyen de fibres optiques.

L'échantillonneur optique 160 échantillonne le signal issu du port c' au moyen d'un signal d'échantillonnage optique fourni par une source 161. La source 161 génère des impulsions laser récurrentes et de très courte durée. L'échantillonneur 160 tel que représenté en figure 1 fonctionne en mode « transmission ». Toutefois, de manière alternative, un échantillonneur fonctionnant en mode « réflexion » peut également être utilisé.

L'échantillonneur optique 160, le dispositif de mise en forme temporelle 141 ainsi que le dispositif de contrôle 171 sont cadencés par un dispositif optoélectronique de synchronisation 170.

Le signal optique issu de l'échantillonneur 160 est converti en signal électrique et numérisé par le convertisseur 180. Les échantillons numériques produits par le convertisseur sont stockés dans la mémoire 181.

Le dispositif de contrôle 171 utilise les échantillons stockés dans la mémoire et le signal prélevé sur le port b' du coupleur 150 pour déterminer le gain à appliquer sur la commande de gain du convertisseur 180 et/ou la commande de gain du laser de pompe de l'amplificateur paramétrique 142 et/ou l'atténuateur optique 125 et/ou le modulateur 105.

La fibre optique 110 est de type monomode afin d'éviter que des effets de dispersion de mode n'apparaissent, qui élargiraient temporellement les signaux impulsionnels qui s'y propagent.

Le coupleur 100 à quatre ports est un coupleur directionnel qui fonctionne comme suit :

- un signal entrant sur le port a est transmis pour une fraction de $\alpha$%, par exemple 50%, sur le port b et pour la fraction restante de $(1-\alpha)$%, par exemple 50%, sur le port c, et
- un signal qui entre sur le port d est transmis pour une fraction de $\alpha$% sur le port b et pour la fraction restante de $(1-\alpha)$% sur le port c.

L'impulsion laser à mesurer I entre dans le dispositif de mesure par le port a du coupleur 100 puis se scinde en une première fraction d'impulsion ($\alpha$%) délivrée sur le port b et une deuxième fraction d'impulsion (($1-\alpha$)%) délivrée sur le port c. La première fraction d'impulsion est dirigée vers le coupleur alors que la seconde est rebouclée, via la fibre optique 110, l'amplificateur paramétrique 120, le filtre optique 130 sur le port d du coupleur 100.

L'impulsion laser circulant dans la boucle est amplifiée lors de son passage dans l'amplificateur paramétrique 120. Le principe de l'amplification paramétrique est connu de l'homme du métier et l'on pourra en trouver une description, par exemple, dans l'ouvrage de G.P.

Agrawal intitulé « Applications of non-linear fiber optics » publié par Academic Press. On rappelle que l'amplification paramétrique est un processus non linéaire d'échange d'énergie entre ondes optiques, basé sur l'effet Kerr optique, sans échange d'énergie avec le milieu de propagation. Schématiquement, lorsqu'une onde de pompe (de puissance élevée) de fréquence $\omega_1$ et un signal optique (de faible intensité) de fréquence $\omega_2$ sont mélangées dans un même milieu présentant certaines caractéristiques non-linéaires, les ondes pompe et signal engendrent un battement temporel à la fréquence $\Delta\omega=\omega_2-\omega_1$. Cette modulation de l'intensité lumineuse I engendre, par effet Kerr optique, un réseau d'indice $n=n_0+n_1.I$, diffractant l'onde de pompe sur les différents ordres de fréquence $\omega_1\pm p.\Delta\omega$ où p est un entier non nul. L'ordre -1 correspond à la fréquence $\omega_1$ et à l'amplification cohérente du signal alors que l'ordre +1 correspond à la génération d'une troisième onde, appelée « idler » et de fréquence $2\omega_1-\omega_2$.

Pour obtenir un transfert optimal d'énergie de la pompe de l'amplificateur paramétrique vers le signal le désaccord de phase linéaire induit par la dispersion de la fibre doit être compensé par le déphasage non linéaire induit par l'effet Kerr optique. Dans le cas où l'amplificateur paramétrique est réalisé au moyen d'une fibre optique, le gain d'amplification dépend de l'écart spectral pompe-signal, de la longueur et de la non-linéarité de la fibre ainsi que de la puissance de pompe. Lorsque l'amplificateur paramétrique est réalisé au moyen d'un seul tronçon de fibre, en choisissant une longueur d'onde de pompe proche de la longueur d'onde de dispersion nulle de la fibre on bénéficiera d'une bande de gain très étendue spectralement.

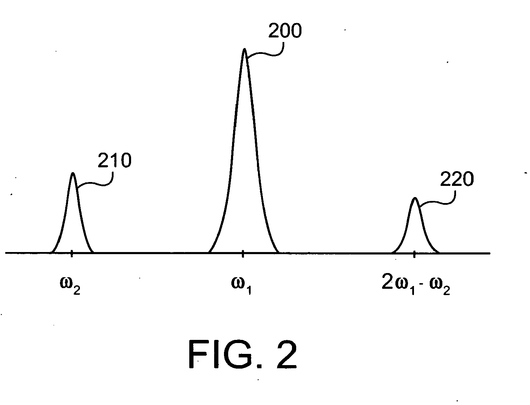

La figure 2 représente le spectre du signal lumineux en sortie de l'amplificateur paramétrique. On y distingue les enveloppes spectrales de la pompe 200, du signal amplifié 210 et de l' « idler » 220. Les ondes signal et « idler » sont amplifiées au fur et à mesure de leur propagation avec l'onde de pompe, en prélevant l'énergie correspondante sur cette dernière.

L'amplificateur paramétrique peut être réalisé, de manière connue en soi, au moyen d'un cristal optique non-linéaire ou plus simplement, comme on l'a déjà indiqué, d'un tronçon de fibre optique. Cette architecture d'amplificateur est communément appelée FOPA (Fiber Optical Parametric Amplifier). Dans ce dernier cas, l'amplification paramétrique peut être avantageusement et directement mise en oeuvre sur un tronçon de la fibre 110.

Le filtre optique 130 a pour fonction d'éliminer l'onde de pompe et l'onde « idler » à chaque tour de boucle de sorte que ces dernières n'interagissent plus avec l'onde de signal au-delà du filtre. La transmission du filtre optique est choisie nulle ou minimale en dehors d'une zone spectrale centrée autour de la fréquence centrale ω2 du signal.

En outre, le dispositif de synchronisation 170 est adapté à fournir au dispositif 141 un signal de déclenchement présentant une période de récurrence égale au temps de parcours $\tau$ de la boucle et de phase ajustée de manière à ce que l'impulsion de pompe délivrée par le dispositif 141 soit synchronisée avec le passage de l'impulsion laser à mesurer dans l'amplificateur paramétrique.

On obtient ainsi à chaque tour de boucle, des conditions d'amplification réinitialisées et parfaitement stables, le gain de boucle étant uniquement fonction de la puissance de la pompe et de la distance de copropagation de l'impulsion à mesurer et de l'impulsion de pompe.

Le dispositif de mise en forme temporelle 141 comprend avantageusement un générateur électronique de signal de mise en forme et un modulateur électro-optique modulant en intensité l'onde de pompe par ledit signal. La forme du signal de modulation est déterminée pour compenser les distorsions introduites par le modulateur électro-optique, de manière à ce que l'impulsion de pompe injectée dans la fibre 140 soit un créneau de plateau très plat. La largeur de l'impulsion de pompe est choisie pour débuter avant que l'impulsion laser à mesurer entre dans l'amplificateur paramétrique et pour se terminer après qu'elle en soit sortie. En tout état de cause, la largeur de l'impulsion de pompe est choisie inférieure au temps de parcours de la boucle. Le générateur du signal de mise en forme peut être réalisé au moyen d'un filtre comprenant une série de lignes couplées par des transistors FET AsGa, la longueur des lignes et les tensions sur les grilles des FETs définissant la réponse impulsionnelle du filtre. Un exemple de réalisation d'un tel filtre a été décrit dans l'article intitulé « Front-End Sources of the LIL-LMJ Fusion Lasers : Progress Report and Prospects » de A. Jolly et al. publié dans Optical Engineering Journal, Vol. 42 n°5, May 2003. Selon un autre de mode de réalisation, le dispositif de mise en forme 141 ne comprend pas de filtre de prédistorsion mais un dispositif optique fonctionnant en mode de saturation, placé en sortie du modulateur électro-optique.

Quant au laser de pompe de l'amplificateur paramétrique, afin de permettre un pompage efficace, il est choisi monomode et très stable dans le temps et faiblement bruité.

Les caractéristiques susmentionnées du laser de pompe de l'amplificateur paramétrique et du dispositif de mise en forme temporelle assurent un gain d'amplification constant pendant le temps de passage de l'impulsion à mesurer dans l'amplificateur et uniforme dans sa bande spectrale, prévenant ainsi une distorsion de ladite impulsion à chaque tour de boucle.

L'utilisation d'une amplification paramétrique au lieu par exemple d'une amplification stimulée, comme décrite dans la demande de brevet précitée est une caractéristique essentielle de la présente invention. Au contraire d'un amplificateur à amplification stimulée qui amplifierait à chaque tour de boucle un bruit de fluorescence (bruit d'ASE pour Amplified Spontaneous Emission) de valeur relativement élevée et dégraderait ainsi rapidement le rapport signal à bruit au fur et à mesure des réplications successives, l'amplificateur paramétrique possède un facteur de bruit proche de 3dB si la pompe est peu bruyante par elle-même, son bruit intrinsèque, dû à la fluorescence paramétrique, se situant à des niveaux de puissance très inférieurs à ceux du bruit d'ASE.

En outre, le gain d'amplification paramétrique étant nul (0 dB) lorsque la puissance de pompe est nulle, tout bruit présent en dehors de l'impulsion de pompe sera atténué. Ainsi, on peut prévoir un gain de boucle supérieur à 1 sans risque d'amplification d'un signal laser parasite.

Le gain d'amplification paramétrique est essentiellement déterminé par l'intensité de l'impulsion de pompe et la distance de copropagation. Optionnellement, un atténuateur optique 125 peut être placé dans la boucle pour permettre un réglage fin des pertes et donc du gain de boucle. Typiquement, l'atténuation peut être réglée dans une plage allant de quelques dB à 15 dB. Comme nous le verrons plus loin, il n'est cependant pas nécessaire d'obtenir un gain de boucle proche de 0 dB mais une valeur aussi faible que possible est cependant préférée. Le réglage de gain (atténuation) de l'atténuateur optique 125 vise à compenser de manière fine la dérive lente de la puissance du laser de pompe de l'amplificateur paramétrique.

Une impulsion optique, dite impulsion optique initiale, dont le profil est à mesurer, est injectée dans le dispositif de mesure par le port a du coupleur 100. Elle est divisée en une première fraction d'impulsion ($\alpha$%) sur le port b, et une seconde fraction d'impulsion (($1-\alpha$)%) sur le port c. On désignera conventionnellement réplique d'ordre 0 cette seconde fraction d'impulsion. Cette réplique est amplifiée par l'amplificateur paramétrique 120 comme on l'a vu plus haut, éventuellement atténuée par l'atténuateur 125, puis filtrée par le filtre optique 130 avant d'entrer dans le port d du coupleur 100.

Lorsqu'elle pénètre dans le port d, la deuxième fraction d'impulsion est elle-même divisée en une troisième fraction d'impulsion ($\alpha$%), délivrée sur le port b et une quatrième fraction d'impulsion (($1-\alpha$)%), dite première réplique, qui est rebouclée sur le port d, après avoir été amplifiée. A chaque tour de boucle, le coupleur 100 transmet une fraction $\alpha$% de la puissance qu'il reçoit du port d sur le port de sortie b et une fraction de (1-$\alpha$)% sur le port c.

L'impulsion à mesurer donne ainsi naissance à une série d'impulsions répliques de l'impulsion initiale, ces répliques étant séparées les unes des autres par une période de récurrence $\tau$, temps de propagation dans la boucle. Les impulsions répliques sont extraites au niveau du port b du coupleur 100.

Les impulsions répliques ainsi extraites sont transmises au port a' du coupleur optique 150. Une fraction en est prélevée au niveau du port b', le reste étant transmis via le port c' à l'échantillonneur optique 160 qui les échantillonne sous l'action des impulsions laser IL délivrées par la source d'impulsions laser 161. L'échantillonneur optique, dont une description détaillée sera donnée plus loin, a pour fonction d'être rendu sensiblement transparent aux impulsions répliques sous l'effet des impulsions laser IL et d'être sensiblement opaque en dehors de ces dernières. La source d'impulsions laser 161 est, préférentiellement, une source à blocage de modes qui fournit des impulsions laser de période $T_e$ et de durée $T_{ML}$ très inférieure à $\tau$ ($T_{ML} \ll \tau$).

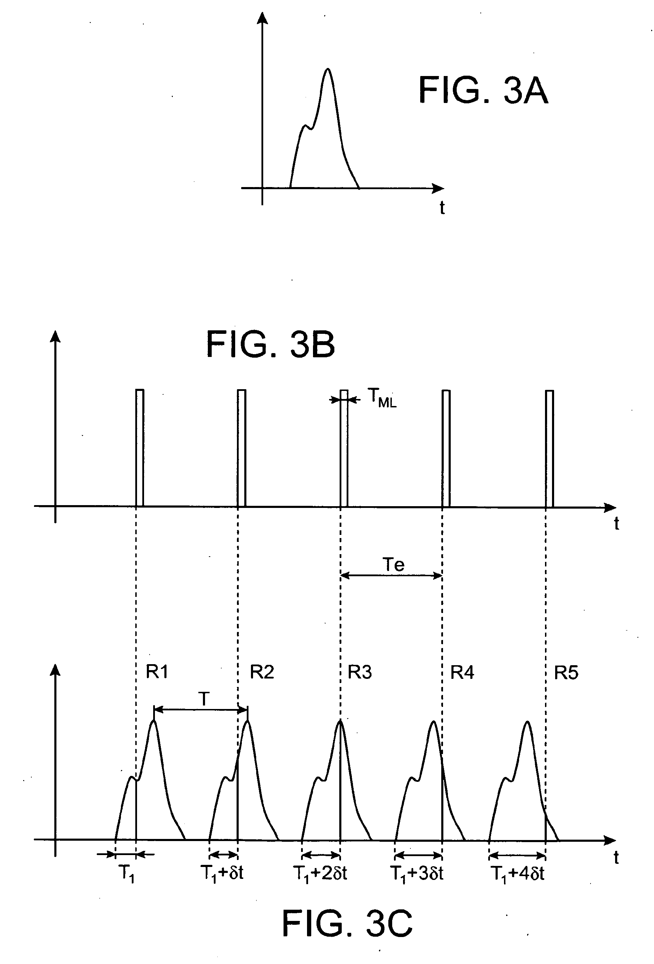

Les figures 3A-3C représentent des chronogrammes permettant d'illustrer l'échantillonnage des impulsions répliques.

La figure 3A illustre l'impulsion optique dont on souhaite mesurer le profil ;

La figure 3B illustre les impulsions de largeur $T_{ML}$ et de période Te qui sont délivrées par la source laser 161 ;

La figure 3C représente une succession de répliques R1, R2, R3, ..., RN, extraites de la boucle de réplication et échantillonnées sur la base des impulsions représentées en figure 3B. La première réplique R1 est échantillonnée à une première position temporelle $T_1$, la position temporelle $T_1$ mesurant une durée qui sépare un instant qui marque le début de la réplique R1 et l'instant d'échantillonnage. Les répliques Ri d'ordre i supérieur à 1 (i>1) sont échantillonnées aux positions temporelles respectives $T_1$+ (i-1) $\delta$t où $\delta$t=$T_e$-$\tau$. Ainsi l'instant d'échantillonnage glisse-t-il de manière progressive, par effet de vernier, d'un incrément $\delta$t à l'intérieur du profil des répliques successives. La quantité $\delta$t, écart entre la période d'échantillonnage et celle de récurrence des répliques est choisie, en valeur absolue, très inférieure à la durée de l'impulsion à analyser, cette durée étant elle-même inférieure à la période de récurrence.

Le nombre maximum d'échantillons qui peuvent être acquis par le dispositif de mesure est N = $\tau$/$\delta$t = 1/(($T_e$/$\tau$)-1). Pour une durée d'impulsion à analyser $\Delta$T, la mesure pourra être au mieux achevée au bout du temps $\tau$.$\Delta$T/$\delta$t. En d'autres termes, il sera possible d'analyser successivement des impulsions successives séparées de $\tau$.$\Delta$T/$\delta$t, soit un taux maximal de répétition (rapport entre durée d'impulsion / temps séparant deux impulsions successives) de 1/N.

Les échantillons Ei (i = 1, 2, ..., N) délivrés par l'échantillonneur optique 160 sont transmis à un convertisseur optique-électrique 180 à gain variable. Ce dernier comprend un photodétecteur, par exemple une photodiode, suivi d'un convertisseur analogique numérique à gain variable. Le photodétecteur peut fonctionner, par exemple, dans des bandes de fréquences analogiques comprises entre 10 Ghz et 60 Ghz, comme l'autorisent actuellement les technologies de télécommunications mais préférentiellement dans des bandes de fréquences beaucoup plus étroites (100 MHz à 1 GHz) pour des besoins de réduction du bruit. La conversion optique/électrique utilisée dans le photodétecteur peut donc être réalisée en mode intégrateur. Le mode intégrateur consiste à assimiler l'amplitude d'un échantillon optique donné à la valeur intégrée dans le temps de la réponse électrique du photodétecteur. Les seules erreurs commises, à corriger éventuellement, sont alors celles qui résultent des effets de saturation ou de dé-saturation du photodétecteur, du décalage de la ligne de base induit par un effet d'empilement des impulsions électriques successives, etc. Les échantillons électriques fournis par le photodétecteur sont transmis au convertisseur analogique-numérique qui les numérise à la fréquence $1/\tau$. La numérisation peut être, par exemple, un codage sur 8 ou 10 bits. Le temps de codage n'est pas critique. Il est seulement limité par la valeur de $\tau$. Les données numériques délivrées par le convertisseur analogique-numérique sont alors transmises à la mémoire tampon 181 dont le temps d'accès est inférieur à $\tau$.

Le dispositif de contrôle 171 reçoit un signal prélevé P sur les répliques extraites de la boucle et lit dans la mémoire tampon les valeurs numériques des échantillons. Il commande le gain du convertisseur 180 ainsi que la puissance du laser de pompe de l'amplificateur paramétrique 142. De manière optionnelle, la boucle de réplication peut comporter un atténuateur optique à réglage fin 125, servant à compenser la dérive lente de la puissance du laser de pompe de l'amplificateur paramétrique 142. Ainsi le dispositif de contrôle 171 applique un niveau de consigne $G_P$ au laser de pompe et corrige la dérive lente de la puissance effective de pompe. De manière optionnelle également, la boucle de réplication peut comporter un modulateur électro-optique 105 permettant d'appliquer un gain (d'atténuation) optique, variable dans le temps, aux impulsions répliques circulant dans la boucle. Dans ce cas, le dispositif de contrôle 171 fournit également le signal de commande au dit modulateur. La variation de gain appliquée via le modulateur électro-optique 105 est toutefois beaucoup plus rapide (de l'ordre de $\tau$) que celle appliquée via l'atténuateur optique 125.

Dans une phase de calibration préalable, une impulsion de forme et d'intensité connues, par exemple un créneau temporel, est injectée à l'entrée du dispositif de mesure. Le dispositif 171 mesure la puissance du signal prélevé P et analyse les échantillons correspondants stockés dans la mémoire. Il en déduit la loi de gain à appliquer sur le convertisseur optique-électrique 180 pour compenser la décroissance d'amplitude des échantillons au cours du temps. Si un modulateur de pertes électro-optique 105 est présent, il en déduit une loi de gain pour le convertisseur 180 et une loi de gain pour le modulateur 105 dont la combinaison permet ladite compensation.

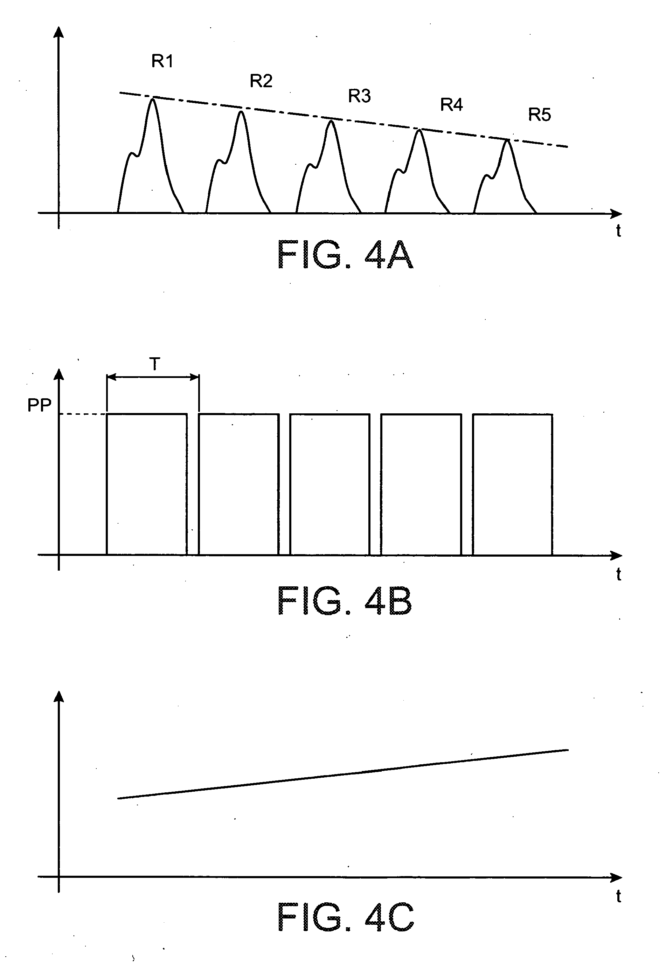

La figure 4A représente un train de répliques Ri extraites de la boucle de réplication. On remarque que le gain de boucle est ici inférieur à l'unité, l'intensité des répliques décroissant dans le temps. Toutefois le gain de boucle pourrait tout aussi bien être supérieur à 1 si le gain d'amplification paramétrique excédait l'atténuation subie dans les autres éléments de la boucle.

La figure 4B représente l'intensité de la pompe de l'amplificateur paramétrique en sortie du dispositif de mise en forme temporelle 141. Le niveau PP du plateau est maintenu stable grâce au dispositif de contrôle 171 agissant via la commande de gain $G_p$ sur la puissance crête de la source paramétrique.

La figure 4C représente le gain appliqué au convertisseur 180 en fonction du temps. La loi de gain a été déterminée dans la phase de calibration pour compenser les variations d'intensité des répliques. Cela permet de fonctionner à rapport signal sur bruit maximum dans le convertisseur 180. Lorsqu'un modulateur de pertes est utilisé dans la boucle, une loi similaire peut être appliquée sur son entrée de modulation, la combinaison des deux lois de gain permettant alors la compensation.

Lors de la phase de calibration préalable, une impulsion optique en créneau est avantageusement utilisée. Les valeurs numériques stockées lors de cette phase décrivent la loi de variation d'intensité à compenser. Selon une variante de réalisation, la calibration est effectuée périodiquement, par exemple à chaque tour de boucle. Pour ce faire, une impulsion optique calibrée en forme de créneau est multiplexée temporellement à l'entrée du dispositif de mesure avec l'impulsion optique dont le profil est à mesurer. La durée de la première est choisie supérieure à la durée de la seconde. Les deux impulsions engendrent des séries de répliques entrelacées. Les répliques de l'impulsion calibrée et celles de l'impulsion à mesurer peuvent être amplifiées par les mêmes impulsions de pompe ou par des impulsions de pompe distinctes, auquel cas le dispositif de synchronisation 170 déclenche via le dispositif de mise en forme temporelle 141 deux créneaux de pompe par tour de boucle. Les valeurs numériques relatives aux échantillons de l'impulsion calibrée servent alors, après interpolation éventuelle, à déterminer à chaque tour de boucle le gain à appliquer au convertisseur 180 et/ou au modulateur 105.

Quel que soit le type de calibration retenu, on notera que les valeurs de gain ne sont à appliquer qu'à la cadence de réplication $1/\tau$, au plus. L'électronique de contrôle est par conséquent réalisable de manière conventionnelle.

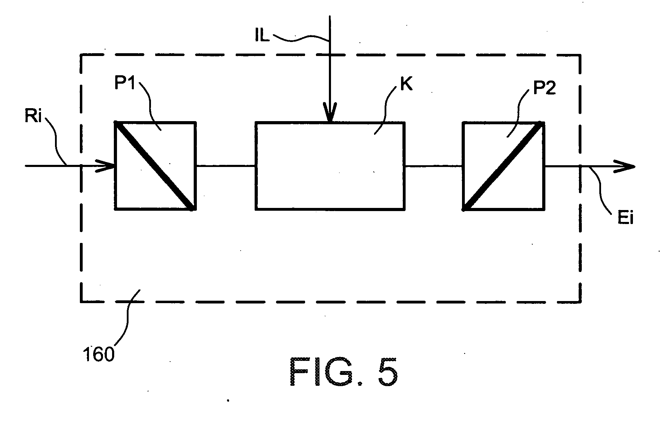

La figure 5 représente une première variante de réalisation de l'échantillonneur optique 160.

L'échantillonneur optique représenté est une cellule de Kerr. La cellule de Kerr comprend un milieu actif à effet Kerr optique K pouvant être placé entre deux polariseurs croisés P1, P2. Lors de l'application d'une impulsion laser IL délivrée par la source 161, le milieu K présente une biréfrigence transitoire suffisante pour faire passer le dispositif d'un état bloqué (milieu non dépolarisant placé entre deux polariseurs croisés) à un état passant (transmission de la composante de polarisation optique dans le plan du polariseur de sortie).

L'échantillonneur optique sous la forme d'une cellule de Kerr présente une excellente résolution temporelle. Il est en effet possible de délivrer des échantillons optiques dont la largeur est de l'ordre de deux cents femtosecondes.

Le milieu actif à effet Kerr peut être, par exemple, un liquide du type CS$_2$ nécessitant un conditionnement en enceinte étanche. Le milieu actif à effet Kerr peut également être un milieu solide à base de verre qui nécessite alors une plus forte intensité laser en sortie de la source 161.

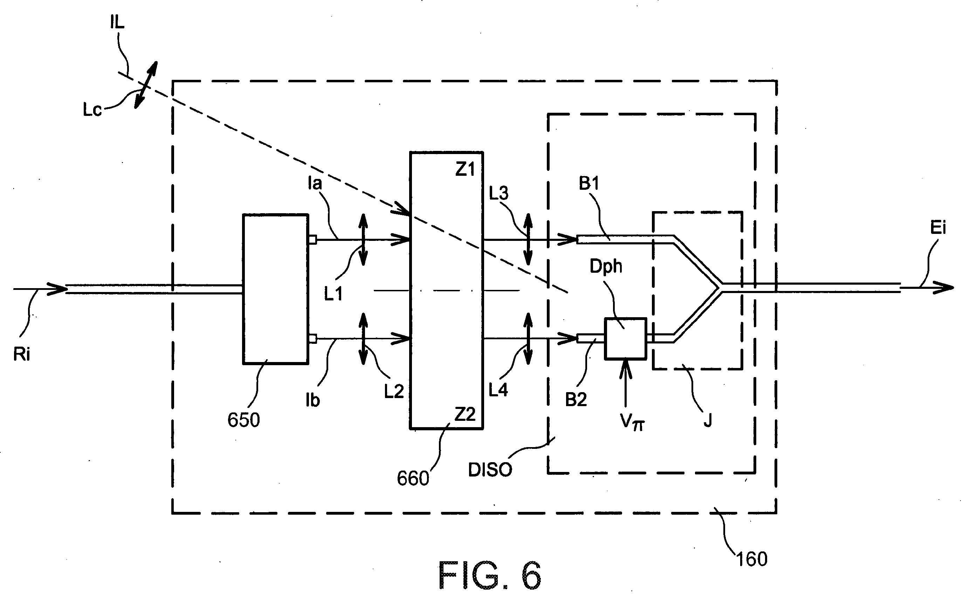

La figure 6 représente une seconde variante de réalisation de l'échantillonneur optique 160.

L'échantillonneur 160 comprend alors un diviseur par deux 650, un absorbant saturable rapide 660, un dispositif interférométrique de soustraction optique DISO et des lentilles de collimation L1, L2, L3, L4. Le dispositif interférométrique de soustraction optique DISO comprend deux bras d'entrée B1, B2, le bras B2 étant muni d'un déphaseur Dph, et une jonction de recombinaison J à deux entrées et une sortie. L'entrée et la sortie de l'échantillonneur sont respectivement l'entrée du diviseur par deux 650 et la sortie de la jonction J. Les bras B1 et B2 et la jonction J sont réalisés à l'aide de tout type de guide d'ondes optiques, par exemple des fibres optiques.

Une impulsion réplique Ri reçue en entrée de l'échantillonneur 160 est divisée en une première fraction d'impulsion Ia et en une deuxième fraction d'impulsion Ib d'amplitude sensiblement identique à l'amplitude de la fraction d'impulsion Ia. La première fraction d'impulsion Ia est transmise vers une première zone Z1 de l'absorbant saturable via une première lentille de collimation L1 et la deuxième fraction d'impulsion Ib est transmise vers une deuxième zone Z2 de l'absorbant saturable via une deuxième lentille de collimation L2.

Le fonctionnement d'un absorbant saturable est basé sur le phénomène de saturation de l'absorption. Des signaux de faible intensité qui traversent un absorbant saturable subissent l'absorption intrinsèque du milieu absorbant et sont, en conséquence, absorbés partiellement. Par contre, des signaux de fortes intensités blanchissent le milieu absorbant qu'ils traversent jusqu'à réduire l'absorption de celui-ci à une valeur sensiblement inférieure à celle de l'absorption initiale. Des signaux de fortes intensités peuvent alors être transmis partiellement.

D'un point de vue mathématique, la caractéristique de transfert d'un absorbant saturable s'exprime par la relation suivante :

$$A(\Phi) = \frac{A_o}{1 + \dfrac{\Phi}{\Phi_{sat}}},$$

où

- A($\Phi$) est le coefficient d'absorption de l'absorbant en fonction de l'intensité $\Phi$ du signal qui éclaire l'absorbant,
- Ao est le coefficient d'atténuation de l'absorbant en absence d'éclairement, et

- $\Phi_{sat}$ est l'intensité de saturation propre de l'absorbant (W/cm$^2$).

Dans le cadre de l'invention, la zone Z1 est éclairée par les fractions d'impulsion Ia et par les impulsions IL alors que la zone Z2 est éclairée par les seules fractions d'impulsions Ib. La puissance crête P$_{ML}$ des impulsions IL issues de la source laser à blocage de modes 161 est choisie pour saturer la transmission de l'absorbant de manière totale ou, du moins, très significative pendant les durées T$_{ML}$. Le faisceau des impulsions IL et le faisceau des fractions d'impulsions Ia ne sont pas colinéaires. Le faisceau des impulsions IL est collimaté sur la zone Z1 d'absorbant saturable, via une lentille de collimation Lc, selon un axe décalé de quelques degrés à quelques dizaines de degrés de l'axe selon lequel est collimaté le faisceau des fractions d'impulsion Ia. Le signal recueilli en sortie de la zone Z1 et qui est collimaté, via la lentille de collimation L3, sur l'entrée du bras B1 est alors constitué des seules fractions d'impulsions Ia qui ont traversé la zone Z1.

Pour une fraction d'impulsion Ia qui pénètre dans la zone Z1, la zone Z1 se comporte comme une porte d'échantillonnage qui travaille à la fréquence F$_e$ de la source laser à blocage de modes (F$_e$=1/T$_e$). Le temps d'ouverture T$_{ech}$ de la porte d'échantillonnage est approximativement égal au temps de recouvrement T$_{sat}$ de l'absorbant saturable. Le temps de recouvrement T$_{sat}$ a une durée supérieure à la durée d'impulsion T$_{ML}$. L'incrément d'échantillonnage du dispositif de mesure, $\delta t$, doit être choisi supérieur ou égal à T$_{sat}$ de manière à ne pas avoir de recouvrement entre échantillons successifs.

L'absorbant saturable selon l'invention peut être réalisé selon plusieurs technologies différentes. Une solution liquide à base de colorants en matrice solide peut être envisagée, ou encore un absorbant saturable solide à base de nano-tubes de carbone ou à semi-conducteurs (SESAM). Les absorbants solides de ce type actuellement les plus rapides présentent des temps de recouvrement T$_{sat}$ de l'ordre de 1 picoseconde. D'un point de vue spectral, l'absorbant saturable est également choisi, préférentiellement, pour être compatible avec un fonctionnement optique dans le proche infrarouge qui est une bande de fréquences utiles pour les lasers à base de Néodyme, d'Ytterbium ou d'Erbium.

Alors que la zone Z1 se comporte comme une porte d'échantillonnage, la zone Z2 présente une absorption de coefficient Ao. Le signal délivré par la zone Z2 est transmis, via la lentille de collimation L4, à l'entrée du bras B2.

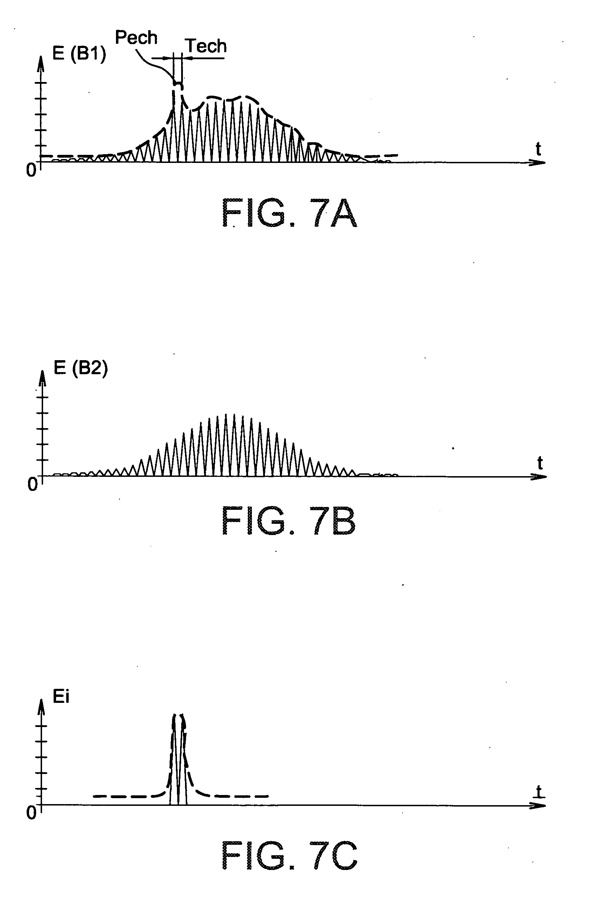

La figure 7A représente le signal échantillonné E(B1) recueilli en sortie de la zone Z1 et la figure 7B représente le signal E(B2) recueilli en sortie de la zone Z2. Le signal E(B1) fait apparaître un pic d'échantillonnage P$_{ech}$ de largeur T$_{ech}$ au sein d'un signal qui reproduit, en l'atténuant, la fraction d'impulsion Ia. Le signal E(B2) reproduit, en l'atténuant, la fraction d'impulsion Ib.

Le bras B2 est équipé d'un déphaseur Dph commandé en tension. La tension $V_\pi$ appliquée au déphaseur Dph est ajustée de façon que le signal optique délivré en sortie du bras B1 soit en opposition de phase avec le signal délivré en sortie du bras B2. La jonction J qui somme les signaux délivrés par les bras B1 et B2 délivre alors un échantillon Ei de largeur $T_{ech}$, représenté en figure 7C.

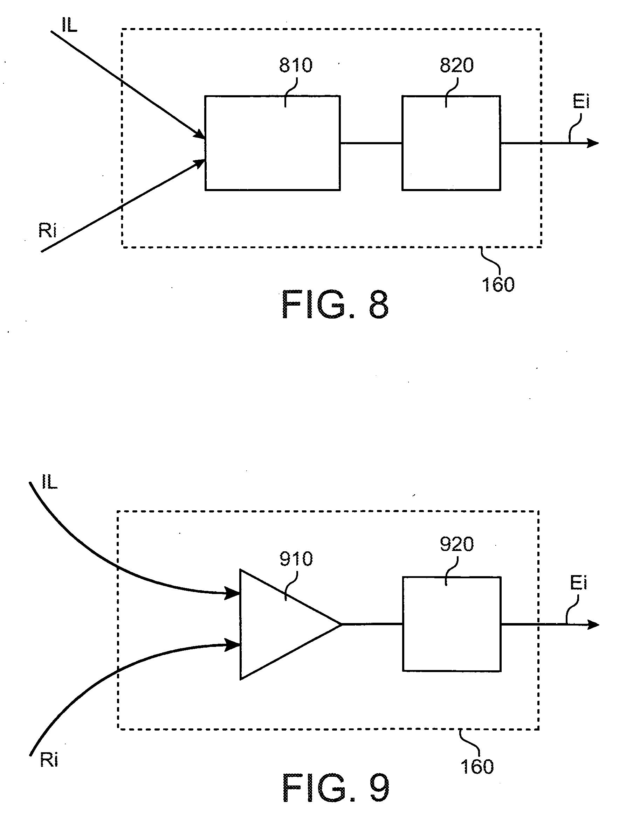

La figure 8 représente schématiquement une troisième variante de réalisation de l'échantillonneur optique 160.

L'échantillonneur optique comprend un cristal optique non linéaire 810, par exemple un cristal de KDP, mélangeant les impulsions IL du laser à modes bloqués 161 et les répliques Ri extraites de la boucle de réplication. Soient $\omega_{IL}$ et $\omega_2$ les fréquences optiques respectives du laser 161 et de l'impulsion laser dont le profil est à mesurer. Le cristal non linéaire génère entre autres un signal optique à la fréquence $\omega_{IL}+\omega_2$ et de puissance proportionnelle à $P_{IL}$. P2 où $P_{IL}$ et P2 sont respectivement les puissance instantanées du signal d'échantillonnage et de l'impulsion réplique. Ce signal optique est isolé au moyen d'un filtre optique 820 de fonction de transfert centrée autour de la fréquence $\omega_{IL}+\omega_2$ et rejetant les fréquences $\omega_{IL}$ et $\omega_2$. Lorsque la puissance du signal d'échantillonnage est nulle, la puissance du signal en sortie du filtre est quasi-nulle et lorsqu'une impulsion IL est présente, la puissance de signal de sortie est proportionnelle à la puissance instantanée de l'impulsion réplique.

La figure 9 représente une quatrième variante de réalisation de l'échantillonneur optique 160.

L'échantillonneur comprend un amplificateur paramétrique à faible gain 910 réalisé à partir d'un cristal non-linéaire ou un tronçon de fibre optique (FOPA). L'amplificateur est pompé par les impulsions IL du laser 161, qui doit être stable et peut bruyant. Lors du pompage l'impulsion réplique Ri est amplifiée et corrélativement un signal «idler» apparaît, proportionnel à la puissance de pompe et à la puissance instantanée de l'impulsion réplique. Un filtre passe-bande 920, centré sur la fréquence $2\omega_{IL}-\omega_2$ du signal « idler » et rejetant le signal de réplique amplifié ainsi que le résidu de pompe, est placé en sortie de l'amplificateur paramétrique. Le signal en sortie du filtre n'apparaît qu'en présence d'une impulsion d'échantillonnage IL et est de puissance proportionnelle à la puissance instantanée de l'impulsion réplique.

Avantageusement, l'invention est applicable non seulement aux impulsions optiques mais également aux impulsions électriques. Il suffit alors de convertir en impulsion optique l'impulsion électrique qui doit être mesurée. Un modulateur électro-optique est alors placé sur le port a du coupleur 100 pour assurer la conversion. Le modulateur électro-optique peut être un modulateur à modulation directe ou un modulateur à modulation indirecte. Dans ce dernier cas, qui est celui qui autorise les plus grandes bandes passantes, le modulateur est alimenté à son entrée par une source laser continue stabilisée de faible puissance. Dans le cas d'une modulation directe, le modulateur peut être, par exemple, une diode. Dans le cas de la mesure d'impulsions électriques, une certaine dégradation des performances fréquentielles est cependant à considérer, la fonction de transfert du modulateur électro-optique intervenant comme un facteur limitatif en termes de dynamique et de bande passante analogique du dispositif. Par contre, la résolution temporelle de l'échantillonnage est conservée.

Le modulateur électro-optique peut être, par exemple, un modulateur issu des technologies à électro-absorbants ou à polymères ou encore un modulateur à ondes progressives.

## Revendications

**1.** Dispositif de mesure de profil d'une impulsion optique monocoup ou à faible taux de répétition, **caractérisé en ce qu'**il comprend

- des moyens de réplication (100,105,120, 125,130) pour créer, à partir d'une impulsion optique initiale (I), une série d'impulsions répliques de ladite impulsion avec une période de récurrence ($\tau$);
- des moyens d'extraction (100b,150) desdites impulsions répliques ;
- des moyens d'échantillonnage optique (160, 161) des impulsions répliques extraites (Ri) pour délivrer des échantillons optiques (Ei) à partir des impulsions répliques extraites (Ri) avec une période d'échantillonnage (Te), l'écart entre la période d'échantillonnage et la période de récurrence étant choisi non nul et très inférieur à la période de récurrence;
- des moyens de détection (180) pour former un signal électrique à partir des échantillons optiques (Ei) délivrés par lesdits moyens d'échantillonnage optique (160,161);
- lesdits moyens de réplication comprenant des moyens d'amplification paramétrique (120,140, 141,142) pour amplifier lesdites impulsions répliques.

**2.** Dispositif selon la revendication 1, **caractérisé en ce que** lesdits moyens de réplication comprennent une boucle optique comportant une pluralité de tronçons de fibre optique (110).

**3.** Dispositif selon la revendication 2, **caractérisé en ce** lesdits moyens d'amplification paramétrique comprennent au moins un tronçon de fibre optique, un laser de pompe paramétrique (142) et des moyens de mise en forme temporelle (141) recevant une onde de pompe dudit laser et délivrant une impulsion de pompe au dit tronçon de fibre optique.

**4.** Dispositif selon la revendication 3, **caractérisé en**

**ce que** les moyens de mise en forme temporelle sont adaptés à délivrer une impulsion de pompe à plateau très plat et à faible bruit.

5. Dispositif selon l'une des revendications 3 ou 4, **caractérisé en ce qu'**il comprend des moyens de synchronisation (170) pour synchroniser l'impulsion de pompe avec le passage d'une impulsion réplique dans les moyens d'amplification paramétrique.

6. Dispositif selon l'une des revendications 3 à 5, **caractérisé en ce que** lesdits moyens de réplication comprennent en outre un filtre optique (130) adapté à filtrer les signaux de.pompe et idler en sortie desdits moyens d'amplification paramétrique.

7. Dispositif selon l'une des revendications précédentes, **caractérisé en ce que** lesdits moyens de réplication comprennent un atténuateur optique (125) en sortie desdits moyens d'amplification paramétrique.

8. Dispositif selon l'une des revendications 2 à 7, **caractérisé en ce que** les moyens d'extraction comprennent un coupleur (100) à deux ports d'entrée et deux ports de sortie, un port d'entrée (100d) et un port de sortie (100c) étant connectés à ladite boucle optique, l'autre port d'entrée (100a) recevant l'impulsion optique initiale et l'autre port de sortie (100b) délivrant lesdites impulsions répliques extraites.

9. Dispositif selon l'une des revendications 1 à 8 **caractérisé en ce que** les moyens d'échantillonnage optique (160) comprend une cellule de Kerr (K) placée entre deux polariseurs croisés (P1,P2).

10. Dispositif selon l'une des revendications 1 à 8, **caractérisé en ce que** les moyens d'échantillonnage optique (160) comprennent un diviseur (650) pour diviser une impulsion réplique en une première fraction d'impulsion réplique (Ia) et en une deuxième fraction d'impulsion réplique (Ib), un absorbant saturable (660) comprenant une première zone (Z1) et une deuxième zone (Z2) éclairées, respectivement, par les première et deuxième fractions d'impulsion réplique, la première zone (Z1) étant rendue sensiblement transparente sous l'effet d'un signal optique d'échantillonnage (IL) et un dispositif interférométrique de soustraction optique (DISO) qui délivre un échantillon optique (Ei) comme résultat de la différence entre un signal échantillonné délivré en sortie de la première zone (Z1) et un signal délivré en sortie de la deuxième zone (Z2).

11. Dispositif selon la revendication 10, **caractérisé en ce que** le dispositif interférométrique de soustraction optique comprend un premier bras (B1) ayant une entrée pour recueillir le signal échantillonné délivré en sortie de la première zone (Z1), un deuxième bras (B2) pour recueillir le signal délivré en sortie de la deuxième zone (Z2), un déphaseur (Dph) commandé en tension, placé en série sur le deuxième bras, pour établir un déphasage de $\pi$ entre le signal optique délivré en sortie du premier bras (B1) et le signal optique délivré en sortie du deuxième bras (B2) et une jonction (J) à deux entrées et une sortie qui recueille sur une première entrée le signal délivré en sortie du premier bras (B1) et sur une deuxième entrée le signal délivré en sortie du deuxième bras (B2) et qui délivre les échantillons optiques (Ei) sur sa sortie.

12. Dispositif selon la revendication 10 ou 11, **caractérisé en ce que** l'absorbant saturable est une solution liquide à base de colorants.

13. Dispositif selon la revendication 10 ou 11, **caractérisé en ce que** l'absorbant saturable comprend des nano-tubes de carbone.

14. Dispositif selon la revendication 10 ou 11, **caractérisé en ce que** l'absorbant saturable est un absorbant à semi-conducteurs.

15. Dispositif selon l'une des revendications 1 à 8, **caractérisé en ce que** les moyens d'échantillonnage optique (660) comprennent un amplificateur paramétrique à faible gain pompé par un signal optique d'échantillonnage suivi par un filtre optique pour isoler le signal idler en sortie dudit amplificateur paramétrique, lesdits échantillons optiques étant donnés par ledit signal idler.

16. Dispositif selon l'une des revendications précédentes, **caractérisé en ce qu'**il inclut un convertisseur optique-électrique (180) comprenant un photodétecteur suivi d'un convertisseur analogique-numérique, ledit convertisseur transformant ainsi les échantillons optiques en valeurs numériques.

17. Dispositif selon la revendication 16, **caractérisé en ce que** ledit convertisseur analogique-numérique est à gain variable.

18. Dispositif selon la revendication 17, **caractérisé en ce qu'**il comprend des moyens de contrôle (171) pour contrôler le gain des moyens d'amplification paramétrique et le gain du convertisseur analogique-numérique.

19. Dispositif selon la revendication 18, **caractérisé en ce que** les moyens de réplication comportent en outre un modulateur de pertes (105), lesdits moyens de contrôle contrôlant le degré d'atténuation dans ledit modulateur de pertes.

20. Dispositif selon l'une des revendications 18 ou 19, **caractérisé en ce que**, dans une phase de calibration un créneau optique est injecté dans le dispositif de mesure et les moyens de contrôle déterminent le gain du convertisseur analogique-numérique et/ou le degré d'atténuation du modulateur de pertes de manière à maintenir la valeur des échantillons numériques à un niveau prédéterminé.

21. Dispositif de mesure de profil d'une impulsion électrique monocoup ou à faible taux de répétition, **caractérisé en ce qu'**il comprend un modulateur électro-optique en série avec un dispositif de mesure de profil d'impulsion optique selon l'une des revendications 1 à 20.

**Claims**

1. Device for measuring the profile of a single optical pulse or an optical pulse with a low repetition rate, **characterised in that** it comprises:

   - replication means (100,105,120,125,130) for generating a series of replica pulses of an initial optical pulse (I), with a repetition period (τ);
   - means (100b,150) for extracting said replica pulses;
   - optical sampling means (160,161) for sampling the extracted replica pulses (Ri) to output optical samples (Ei) from the extracted replica pulses (Ri) with a sampling period (Te), the deviation between the sampling period and the repetition period being chosen to be not equal to zero and very much less than the repetition period;
   - detection means (180) for obtaining an electrical signal from optical samples (Ei) output by said optical sampling means (160,161);
   - said replication means comprising parametric amplification means (120,140,141,142) for amplifying said replica pulses.

2. Device according to claim 1, **characterised in that** said replication means comprise an optical loop comprising a plurality of optical fibre segments (110).

3. Device according to claim 2, **characterised in that** said parametric amplification means comprise at least one optical fibre segment, a parametric pump laser (142) and time shaping means (141) receiving a pump wave from said laser and outputting a pump pulse to said optical fibre segment.

4. Device according to claim 3, **characterised in that** time shaping means are capable of outputting a pump pulse with a very flat pulse and low noise.

5. Device according to either claim 3 or 4, **characterised in that** it comprises synchronization means (170) to synchronize the pump pulse with a replica pulse passing in the parametric amplification means.

6. Device according to any one of claims 3 to 5, **characterised in that** said replication means also comprise an optical filter (130) capable of filtering pump and idler signals at the output from said parametric amplification means.

7. Device according to one of the previous claims, **characterised in that** said replication means comprise an optical attenuator (125) at the output from said parametric amplification means.

8. Device according to one of claims 2 to 7, **characterised in that** the extraction means comprise a coupler (100) with two input ports and two output ports, one input port (100d) and one output port (100c) being connected to said optical loop, the other input port (100a) receiving the initial optical pulse and the other output port (100b) outputting said extracted replica pulses.

9. Device according to one of claims 1 to 8, **characterised in that** the optical sampling means (160) comprise a Kerr cell (K) installed between two crossed polarizers (P1,P2).

10. Device according to one of claims 1 to 8, **characterised in that** the optical sampling means (160) comprise a divider (650) to divide a replica pulse into a first replica pulse fraction (Ia) and a second replica pulse fraction (Ib), a saturable absorbent (660) comprising a first zone (Z1) and a second zone (Z2) respectively illuminated by the first and the second replica pulse fractions, the first zone (Z1) being made approximately transparent under the effect of an optical sampling signal (IL) and an optical interferometric subtraction device (DISO) that outputs an optical sample (Ei) as the result of the difference between a sampled signal output from the first zone (Z1) and a signal output from the second zone (Z2).

11. Device according to claim 10, **characterised in that** the optical interferometric subtraction device comprises a first arm (B1) with an input to collect the sampled signal output from the first zone (Z1) a second arm (B2) to collect the signal output from the second zone (Z2), a voltage-controlled phase shifter (Dph), installed in series on the second arm, to set up a phase shift n between the optical signal output from the first arm (B1) and the optical signal output from the second arm (B2) and a junction (J) with two inputs and an output that collects the signal output from the first arm (B1) on a first input and the signal output from the second arm (B2) on a second input and that outputs optical samples (Ei) on its output.

12. Device according to claim 10 or 11, **characterised in that** the saturable absorbent is a liquid solution comprising dyes.

13. Device according to claim 10 or 11, **characterised in that** the saturable absorbent comprises carbon nano-tubes.

14. Device according to claim 10 or 11, **characterised in that** the saturable absorbent is based on semiconductors.

15. Device according to one of claims 1 to 8, **characterised in that** the optical sampling means (660) comprise a low gain parametric amplifier pumped by an optical sampling signal followed by an optical filter to isolate the idler signal at the output from said parametric amplifier, said optical samples being given by said idler signal.

16. Device according to one of the previous claims, **characterised in that** it includes an optical-electrical converter (180) comprising a photodetector followed by an analog-digital converter, said converter thus converting optical samples into digital values.

17. Device according to claim 16, **characterised in that** said analog-digital converter is a variable gain converter.

18. Device according to claim 17, **characterised in that** it comprises control means (171) to control the gain of the parametric amplification means and the analog-digital converter.

19. Device according to claim 18, **characterised in that** replication means also comprise a loss modulator (105), said control means controlling attenuation level in said loss modulator.

20. Device according to either claim 18 or 19, **characterised in that**, in a calibration phase, an optical pulse is injected in the measurement device and control means determine the gain of the analog-digital converter and/or the attenuation level of the loss modulator so as to maintain the value of the digital samples at a predetermined level.

21. Device for measuring the profile of a single electrical pulse or an electrical pulse with a very low repetition rate, **characterised in that** it comprises an electro-optical modulator in series with a device for measuring the profile of an optical pulse according to one of claims 1 to 20.

**Patentansprüche**

1. Vorrichtung zur Messung des Profiles eines optischen Einzelpulses oder eines optischen Pulses mit geringer Wiederholrate, **dadurch gekennzeichnet, dass** sie umfaßt:

   - Replikationsmittel (100, 105, 120, 125, 130) zum Erzeugen, ausgehend von einem optischen Anfangspuls (I), einer Serie von Replikpulsen des Pulses mit einer Wiederholungsperiode ($\tau$);
   - Mittel (100b, 150) zum Extrahieren der Replikpulse;
   - Mittel (160, 161) zum optischen Abtasten der extrahierten Replikpulse (Ri) zur Lieferung von optischen Abtastwerten (Ei) ausgehend von den extrahierten Replikpulsen (Ri) mit einer Abtastperiode (Te), wobei der Abstand zwischen der Abtastperiode und der Wiederholungsperiode ungleich Null und viel kleiner als die Wiederholungsperiode gewählt ist;
   - Detektionsmittel (180) zum Bilden eines elektrischen Signals ausgehend von den optischen Abtastwerten (Ei), die von den Mitteln (160, 161) zur optischen Abtastung geliefert werden;
   - wobei die Replikationsmittel Mittel (120, 140, 141, 142) zur parametrischen Verstärkung umfassen, um die Replikpulse zu verstärken.

2. Vorrichtung nach Anspruch 1, **dadurch gekennzeichnet, dass** die Replikationsmittel eine optische Schleife umfassen, die eine Mehrzahl von optischen Faserabschnitten (110) umfaßt.

3. Vorrichtung nach Anspruch 2, **dadurch gekennzeichnet, dass** die Mittel zur parametrischen Verstärkung wenigstens einen optischen Faserabschnitt, einen Laser (142) zum parametrischen Pumpen sowie Mittel (141) zum zeitlichen Formen umfassen, die eine Pumpwelle des Lasers empfangen und einen Pumppuls an den optischen Faserabschnitt liefern.

4. Vorrichtung nach Anspruch 3, **dadurch gekennzeichnet, dass** die Mittel zum zeitlichen Formen dazu ausgelegt sind, einen Pumppuls mit sehr flachem Plateau und geringem Rauschen zu liefern.

5. Vorrichtung nach einem der Ansprüche 3 oder 4, **dadurch gekennzeichnet, dass** sie Synchronisationsmittel (170) zum Synchronisieren des Pumppulses mit dem Durchgang eines Replikpulses in den Mitteln zur parametrischen Verstärkung umfaßt.

6. Vorrichtung nach einem der Ansprüche 3 bis 5, **dadurch gekennzeichnet, dass** die Replikationsmittel ferner ein optisches Filter (130) umfassen, das dazu ausgelegt ist, die Pump- und Idler-Signale am Ausgang der Mittel zur parametrischen Verstärkung zu filtern.

7. Vorrichtung nach einem der vorhergehenden Ansprüche, **dadurch gekennzeichnet, dass** die Replikationsmittel einen optischen Dämpfer (125) am Ausgang der Mittel zur parametrischen Verstärkung umfassen.

8. Vorrichtung nach einem der Ansprüche 2 bis 7, **dadurch gekennzeichnet, dass** die Extraktionsmittel einen Koppler (100) mit zwei Eingangsanschlüssen und zwei Ausgangsanschlüssen umfassen, wobei ein Eingangsanschluß (100d) und ein Ausgangsanschluß (100c) mit der optischen Schleife verbunden sind, wobei der andere Eingangsanschluß (100a) den optischen Anfangspuls empfängt und der andere Ausgangsanschluß (100b) die extrahierten Replikpulse ausgibt.

9. Vorrichtung nach einem der Ansprüche 1 bis 8, **dadurch gekennzeichnet, dass** die optischen Abtastmittel (160) eine Kerrzelle (K) umfassen, die zwischen zwei gekreuzten Polarisatoren (P1, P2) platziert ist.

10. Vorrichtung nach einem der Ansprüche 1 bis 8, **dadurch gekennzeichnet, dass** die optischen Abtastmittel (160) einen Teiler (650) zum Teilen eines Replikpulses in eine erste Replikpulsfraktion (Ia) und in eine zweite Replikpulsfraktion (Ib) umfassen, einen sättigbaren Absorber (660), der eine erste Zone (Z1) und eine zweite Zone (Z2) umfaßt, die von der ersten bzw. von der zweiten Replikpulsfraktion beleuchtet werden, wobei die erste Zone (Z1) im wesentlichen transparent gemacht wird unter Einwirkung eines optischen Abtastsignals (IL), und eine interferometrische Vorrichtung zur optischen Subtraktion (DISO), die einen optischen Abtastwert (Ei) ausgibt als Ergebnis der Differenz zwischen einem abgetasteten Signal, das am Ausgang der ersten Zone (Z1) ausgegeben wird, und einem Signal, das am Ausgang der zweiten Zone (Z2) ausgegeben wird.

11. Vorrichtung nach Anspruch 10, **dadurch gekennzeichnet, dass** die interferometrische Vorrichtung zur optischen Subtraktion einen ersten Arm (B1) umfaßt, der einen Eingang hat, um das abgetastete Signal zu empfangen, das am Ausgang der ersten Zone (Z1) ausgegeben wird, einen zweiten Arm (B2), um das Signal zu empfangen, das am Ausgang der zweiten Zone (Z2) ausgegeben wird, einen spannungsgesteuerten Phasenschieber (Dph), der in Reihe am zweiten Arm platziert ist, um eine Phasenverschiebung von π zwischen dem optischen Signal, das am Ausgang des ersten Arms (B1) ausgegeben wird, und dem optischen Signal zu bewirken, das am Ausgang des zweiten Arms (B2) ausgegeben wird, sowie eine Verbindung (J) mit zwei Eingängen und einem Ausgang, die an einem ersten Eingang das Signal empfängt, das am Ausgang des ersten Arms (B1) ausgegeben wird, und an einem zweiten Eingang das Signal, das am Ausgang des zweiten Arms (B2) ausgegeben wird, und die an ihrem Ausgang die optischen Abtastwerte (Ei) ausgibt.

12. Vorrichtung nach Anspruch 10 oder 11, **dadurch gekennzeichnet, dass** der sättigbare Absorber eine flüssige Lösung auf Basis von Farbstoffen ist.

13. Vorrichtung nach Anspruch 10 oder 11, **dadurch gekennzeichnet, dass** der sättigbare Absorber Nanoröhrchen aus Kohlenstoff umfaßt.

14. Vorrichtung nach Anspruch 10 oder 11, **dadurch gekennzeichnet, dass** der sättigbare Absorber ein Halbleiter-Absorber ist.

15. Vorrichtung nach einem der Ansprüche 1 bis 8, **dadurch gekennzeichnet, dass** die optischen Abtastmittel (660) einen parametrischen Verstärker mit geringer Verstärkung umfassen, der durch ein optisches Abtastsignal gepumpt wird, auf den ein optisches Filter folgt, um das Idler-Signal am Ausgang des parametrischen Verstärkers zu isolieren, wobei die optischen Abtastwerte durch das Idler-Signal gegeben sind.

16. Vorrichtung nach einem der vorhergehenden Ansprüche, **dadurch gekennzeichnet, dass** sie einen optoelektrischen Wandler (180) enthält, der einen Fotodetektor umfaßt, auf welchen ein Analog-/Digital-Wandler folgt, wobei der Wandler somit die optischen Abtastwerte in digitale Werte transformiert.

17. Vorrichtung nach Anspruch 16, **dadurch gekennzeichnet, dass** der Analog-IDigital-Wandler eine variable Verstärkung aufweist.

18. Vorrichtung nach Anspruch 17, **dadurch gekennzeichnet, dass** sie Steuermittel (171) umfaßt, um die Verstärkung der Mittel zur parametrischen Verstärkung sowie die Verstärkung des Analog-/Digital-Wandlers zu steuern.

19. Vorrichtung nach Anspruch 18, **dadurch gekennzeichnet, dass** die Replikationsmittel ferner einen Verlustmodulator (105) umfassen, wobei die Steuermittel den Dämpfungsgrad in dem Verlustmodulator steuern.

20. Vorrichtung nach einem der Ansprüche 18 oder 19, **dadurch gekennzeichnet, dass** in einer Kalibrierungsphase ein optischer Impuls in die Meßvorrichtung injiziert wird, und dass die Steuermittel die Verstärkung des Analog-/Digital-Wandlers und/oder den Dämpfungsgrad des Verlustmodulators derart bestimmen, dass der Wert der digitalen Abtastwerte auf einem vorbestimmten Niveau gehalten wird.

21. Vorrichtung zur Messung des Profils eines elektrischen Einzelpulses oder eines Pulses mit geringer Wiederholrate, **dadurch gekennzeichnet, dass** sie einen elektrooptischen Modulator in Reihe mit einer Vorrichtung zum Messen des Profils eines optischen Pulses nach einem der Ansprüche 1 bis 20 umfaßt.

FIG. 1

FIG. 2

FIG. 3A

FIG. 3B

$T_{ML}$

$T_e$

R1    R2    R3    R4    R5

T

$T_1$    $T_1+\delta t$    $T_1+2\delta t$    $T_1+3\delta t$    $T_1+4\delta t$

FIG. 3C

FIG. 4A

FIG. 4B

FIG. 4C

IL

P1　　　　　K　　　　　P2

Ri

Ei

160

FIG. 5

FIG. 6

EP 1 960 750 B1

E (B1)  Pech  Tech

0                                                                    t

## FIG. 7A

E (B2)

0                                                                    t

## FIG. 7B

Ei

0                                                                    t

## FIG. 7C

IL

810   820

Ei

Ri

160

# FIG. 8

IL

910   920

Ei

Ri

160

# FIG. 9

**RÉFÉRENCES CITÉES DANS LA DESCRIPTION**

**Documents brevets cités dans la description**

- FR 2872279

- US 2005168247 A

**Littérature non-brevet citée dans la description**

- **HANSRYD et al.** Fiber-Based Optical Parametric Amplifiers and Their Applications. *IEEE Journal of Selected Topics in Quantum Electronics,* Mai 2002, vol. 8 (3), 506-519
- **DENG et al.** Single-shot Optical sampling Oscilloscope for Ultrafast Optical Waveforms. *IEEE Photonics Technology Letters,* Mars 1998, vol. 10 (3), 397-399

- **G.P. AGRAWAL.** Applications of non-linear fiber optics. Academic Press
- **A. JOLLY et al.** Front-End Sources of the LIL-LMJ Fusion Lasers : Progress Report and Prospects. *Optical Engineering Journal,* Mai 2003, vol. 42 (5